# EUROPÄISCHE PATENTSCHRIFT

(11) **EP 3 609 646 B1**
(45) Veröffentlichungstag und Bekanntmachung des Hinweises auf die Patenterteilung: **22.10.2025**
(21) Anmeldenummer: 18718678.8
(22) Anmeldetag: 03.04.2018
(51) Int. Cl.: B23K 26/282, B23K 26/348, B23K 26/00, F16C 3/02, B60B 35/00, B23K 101/06, B23K 101/00

(54) **VERFAHREN ZUM HERSTELLEN EINES ACHSKÖRPERS EINER FAHRZEUGACHSE SOWIE ACHSKÖRPER EINER FAHRZEUGACHSE**
METHOD FOR PRODUCING AN AXLE HOUSING OF A VEHICLE AXLE, AND AXLE HOUSING OF A VEHICLE AXLE
PROCÉDÉ PERMETTANT DE FABRIQUER UN CORPS D'ESSIEU DE VÉHICULE AINSI QUE CORPS D'ESSIEU DE VÉHICULE

(30) Priorität: 10.04.2017 DE 102017107725
(43) Veröffentlichungstag der Anmeldung: 19.02.2020
(73) Patentinhaber: BPW Bergische Achsen KG, 51674 Wiehl (DE)
(72) Erfinder: PICKER, Heinrich, 42499 Hückeswagen (DE); GIANTSIOS, Katarzyna, 57627 Hachenburg (DE)
(74) Vertreter: DREISS Patentanwälte PartG mbB
(86) Internationale Anmeldenummer: PCT/DE2018/100293
(87) Internationale Veröffentlichungsnummer: WO 2018/188688

(56) Entgegenhaltungen:
- EP-A1- 0 941 783
- DE-A1- 102010 028 745
- US-A1- 2004 185 946
- US-A1- 2007 132 307

## Beschreibung

Die Erfindung betrifft ein Verfahren zum Herstellen eines Achskörpers einer Fahrzeugachse durch stoffschlüssiges Verbinden eines Achsrohrs mit einem auf der Längsachse des Achsrohrs angeordneten Achsschenkel, welcher mit Lagerflächen für die Lagerung eines Fahrzeugrades versehen ist und dem Achsrohr zugewandt einen Rohrquerschnitt aufweist, der im Wesentlichen gleich ist dem Rohrquerschnitt des Achsrohrs.

Ferner betrifft die Erfindung einen vorzugsweise durch ein solches Verfahren herstellbaren Achskörper einer Fahrzeugachse, bestehend aus einem Achsrohr und einem mit Lagerflächen für die Lagerung des jeweiligen Fahrzeugrades versehenen Achsschenkel, welcher dem Achsrohr zugewandt einen Rohrquerschnitt aufweist, der im Wesentlichen gleich ist dem Rohrquerschnitt des Achsrohrs, und wobei die beiden Rohrquerschnitte gegeneinander gesetzt und über eine Schweißnaht stoffschlüssig miteinander verbunden sind.

Ein durch Schweißen hergestellter Achskörper ist in der EP 2 133 164 B1 als eine mögliche Ausführungsform beschrieben. An einem zentralen Achsrohr sind an dessen beiden Enden Radaufnahmeabschnitte befestigt, die allgemein auch als Achsschenkel bezeichnet werden. Die Rohrquerschnitte der Radaufnahmeabschnitte sind im Verbindungsbereich gleich den Rohrquerschnitten des zentralen Achsrohrs. Die Verbindung erfolgt durch ein Schweißverfahren, wobei die EP 2 133 164 B1 vor allem einen Reibschweißprozess erwähnt. Jedoch ist es auch Stand der Technik, für die stoffschlüssige Verbindung des Achsschenkels ein übliches Lichtbogen-Schweißverfahren einzusetzen. US 2004/185946 A1 offenbart auch ein Verfahren zum Herstellen eines Achskörpers einer Fahrzeugachse durch Schweißen eines Achsrohrs mit einem auf der Längsachse des Achsrohrs angeordneten Achsschenkel.

Achskörper, vor allem bei deren Verwendung als Nutzfahrzeugachse, unterliegen neben den bremsbedingten Torsionslasten auch starken dynamischen Biegebelastungen. Der dabei im Achskörper herrschende Belastungszustand ist unterschiedlich in der Oberseite des Achskörpers, wo vor allem Druckbelastungen herrschen, im Vergleich zur Unterseite des Achskörpers, wo vor allem Zugbelastungen wirken. Herkömmliche Schweißverfahren ebenso wie der Reibschweißprozess berücksichtigen diese unterschiedlichen Belastungszustände nicht. Dieser Nachteil wird nur teilweise dadurch aufgewogen, dass ein solcher Achskörper in beliebiger Drehlage in der Achskonstruktion verbaut werden kann, d. h. ohne Unterscheidung, welcher Umfangsabschnitt des Achskörpers sich unten im Bereich der vor allem Zugbelastungen, und welcher Umfangsabschnitt sich oben im Bereich der vor allem Druckbelastungen befindet. Dieser Vorteil allerdings ist nur ein vermeintlicher, da bei vielen Achskörpern die Drehlage ohnehin durch Anbauteile wie z. B. Bremsträger vorgegeben und bei der Achsmontage zu beachten ist.

Ausgehend von dieser Situation liegt der Erfindung die **Aufgabe** zugrunde, für das Herstellen eines Achskörpers aus einem Achsrohr und einem daran befestigten Achsschenkel ein bezüglich der fahrdynamischen Belastungen, denen der Achskörper typischerweise im Fahrbetrieb ausgesetzt ist, optimiertes Schweißverfahren zu entwickeln. Des Weiteren soll ein entsprechender Achskörper mit Eignung insbesondere für eine Nutzfahrzeugachse geschaffen werden.

Zur Lösung dieser Aufgabe wird ein Herstellverfahren mit den eingangs angegebenen Merkmalen vorgeschlagen, welches durch die Merkmale des Anspruchs 1 gekennzeichnet ist.

Vorgeschlagen wird ferner ein Achskörper einer Fahrzeugachse, wie er durch dieses Verfahren herstellbar ist. Ein solcher Achskörper besteht aus einem Achsrohr und mindestens einem mit Lagerflächen für die Lagerung des jeweiligen Fahrzeugrades versehenen Achsschenkel, welcher dem Achsrohr zugewandt einen Rohrquerschnitt aufweist, der im Wesentlichen gleich ist dem Rohrquerschnitt des Achsrohrs. Die beiden Rohrquerschnitte sind gegeneinandergesetzt und über eine Schweißnaht stoffschlüssig miteinander verbunden, wobei die Schweißnaht von der Außenseite der Rohrquerschnitte bis zu einer auf der Innenseite der Rohrquerschnitte angeordneten Schweißnahtwurzel reicht, und sich die Schweißnaht über den gesamten Umfang des Achskörpers erstreckt mit einem ersten, über etwa die Hälfte des Umfangs führenden Schweißnahtabschnitt und einem zweiten, über den Rest des Umfangs führenden Schweißnahtabschnitt, und wobei die Schweißnahtwurzel auf der Rohrinnenseite entlang des ersten Schweißnahtabschnitts einen zum Rohrinneren vorstehenden Grat aus Materialschmelze, und entlang des zweiten Schweißnahtabschnitts eine im Vergleich geglättete Naht aufweist.

Wesentlicher Aspekt der Erfindung ist der Einsatz eines dualen Schweißverfahrens durch Kombination einer konventionell ausgebildeten Lichtbogen-Schweißeinrichtung mit einer parallel, also gleichzeitig betriebenen Laser-Schweißeinrichtung. Zudem arbeiten beide Schweißeinrichtungen von außen her auf in etwa denselben Umfangsabschnitt des Achskörpers. Die Strahlrichtung des Laserstrahls ist derart, dass der Laserstrahl senkrecht zur Längserstreckung des Achsrohrs steht, und er dadurch rechtwinklig auf die Längserstreckung der Rohraußenseite trifft. Vorzugsweise schneidet er die Längsachse des Achsrohrs.

Eine weitere Besonderheit besteht darin, dass zwar eine Schweißnaht über den gesamten Umfang gezogen wird, dass aber nur auf einem Teilumfang, der ca. die Hälfte des Gesamtumfangs beträgt, die noch vorhandene Sekundärenergie des Laserstrahls zusätzlich dazu genutzt wird, die an der Rohrinnenseite zu einer deutlichen Wurzelbildung neigende Schweißnaht nachzuarbeiten. Die an der Rohrinnenseite noch auftreffende Energie (Sekundärenergie) des Laserstrahls wird ausgenutzt, um den im Bereich der Schweißnahtwurzel entstandenen Grat aus Materialschmelze abzutragen, zu glätten und zu vergleichmäßigen. Dadurch wird die Schweißnahtwurzel hier geglättet, was auf diesem Umfangssegment die stoffschlüssige Bindung zwischen den zwei Rohrenden noch einmal verbessert und Kerbwirkungen reduziert, um so Zugbelastungen besonders gut widerstehen zu können.

Im Ergebnis wird nach Beendigung des Ziehens der Schweißnaht, was nach Erreichen eines Umfangswinkels zwischen 360° und 370° der Fall ist, an der Rohrinnenseite ein erster Teilumfang vorhanden sein, der an der Schweißnahtwurzel durch einen deutlich erkennbaren Grat aus Materialschmelze gekennzeichnet ist, sowie ein zweiter Teilumfang, auf dem die Rohrinnenseite vergleichsweis glatter ausgebildet ist. Versuche haben gezeigt, dass auf dem zweiten, also dem auf der Rohrinnenseite mittels des Laserstrahls geglätteten Umfangssegment die Güte der Schweißverbindung nochmals verbessert ist. Daher wird der Achskörper so in dem Fahrwerk und insbesondere Nutzfahrzeugfahrwerk verbaut, dass sich das zweite Umfangssegment im Fahrbetrieb unten befindet und es somit dort angeordnet ist, wo primär die kritischen Zugbelastungen herrschen.

Insgesamt wird daher ein für das Herstellen eines Achskörpers aus einem Achsrohr und einem daran befestigten Achsschenkel bezüglich der typischen fahrdynamischen Belastungen, denen der Achskörper im Fahrbetrieb ausgesetzt ist, optimiertes Schweißverfahren erreicht.

Um bei der späteren Montage des Achskörpers im Nutzfahrzeugfahrwerk die belastungsoptimierte Einbaulage sicherzustellen, kann der Achskörper außen mit mindestens einem Kennzeichen versehen sein, welches eindeutig dem Teilumfang, auf dem sich der erste, ungeglättete Schweißnahtabschnitt und / oder dem Teilumfang, auf dem sich der zweite, geglättete Schweißnahtabschnitt befindet, zugeordnet ist. Zum Beispiel kann ein solches Kennzeichen, in Wort oder Symbol, für "oben" und / oder für "unten" stehen, um so dem Monteur bei der Achsmontage einen eindeutigen Einbauhinweis zu geben. Weitere Vorteile und Einzelheiten werden nachfolgend anhand eines Ausführungsbeispiels erläutert. Dabei wird auf die Zeichnungen Bezug genommen. Darin zeigen:
Fig. 1 in stark verkürzter Ansicht einen Achskörper, wie er in einer nichtangetriebenen Nutzfahrzeugachse eines Nutzfahrzeuganhängers Verwendung findet;
Fig. 2 in einer stark vereinfachten Übersichtsdarstellung eine dual betriebene Schweißanordnung zur Herstellung des Achskörpers, wobei die einzelnen Gegenstände in der Schweißebene dargestellt sind;
Fig. 2a die Gegenstände nach Fig. 2 mit weiteren Details;
Fig. 3a - 3c in der Schweißebene einzelne Verfahrensstadien des Schweißprozesses, und
Fig. 4 einen Schnitt durch den Achskörper entlang seiner Längserstreckung, hier im

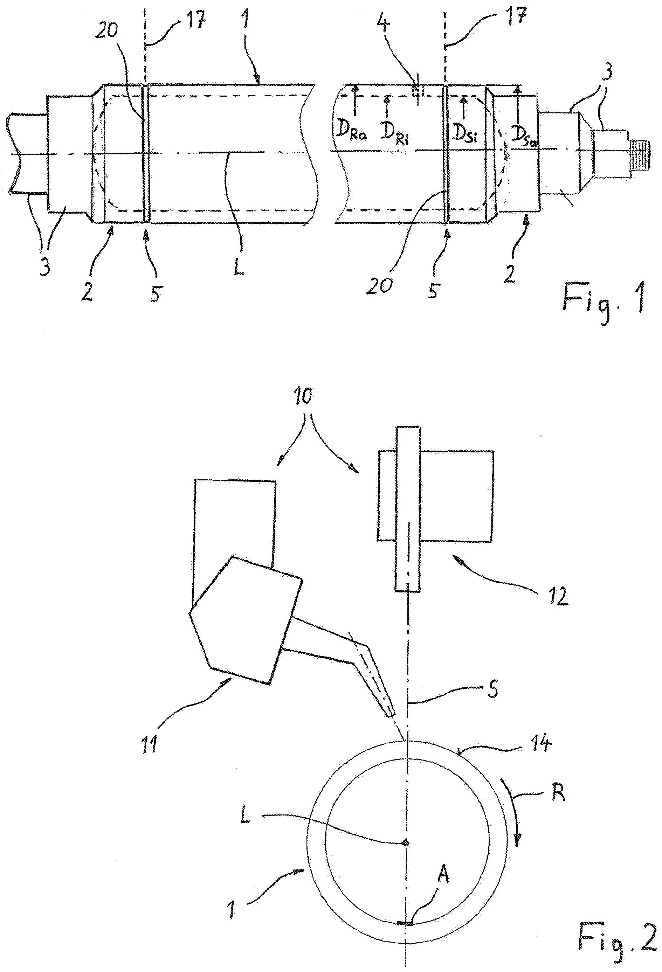

Bereich der zwischen Achsrohr und Achsschenkel hergestellten Schweißverbindung. Der in Fig. 1 wiedergegebene Achskörper, hier gestaltet als durchgehender Achskörper für eine nicht angetriebene Nutzfahrzeugachse, besteht aus insgesamt drei Längsabschnitten. Den zentralen Längsabschnitt bildet ein Achsrohr 1 aus Stahl. An beiden offenen Enden des Achsrohrs 1 wird mittels eines im Folgenden näher beschriebenen Schweißverfahrens jeweils ein Achsschenkel 2 befestigt. Jeder Achsschenkel 2 besteht vorzugsweise aus Stahl und ist mit Lagerflächen 3 für Lagerbauteile, zum Beispiel für die Wälzlager des jeweiligen Fahrzeugrades und / oder für die Lagerung einer Bremstrommel oder einer Bremsscheibe einer Scheibenbremse versehen. Ferner kann an dem Achsschenkel 2 ein Bremsträger einer Trommelbremse oder Scheibenbremse befestigt sein.

Das Achsrohr 1 erhält seine Länge durch Sägen. Der Sägeschnitt ist rechtwinklig zur Längserstreckung des Achsrohrs geführt. Er führt zu einer gesägten Stoßfläche, welche ohne weitere Behandlung geeignet ist für den anschließenden Schweißprozess.

Außerdem wird das Achsrohr 1 zur Schweißvorbereitung mit einer Bohrung 4 von vorzugsweise 4 bis 10mm Durchmesser versehen. Die Bohrung 4 verbindet das Achsrohrinnere mit der Umgebung. Sie dient während des Schweißprozesses als Entlüftungsöffnung für entstehende Schweißgase.

Am späteren fertigen Produkt wird die Bohrung 4 nicht mehr benötigt. Sie wird daher später verschlossen, so dass Feuchtigkeit und Schmutz nicht ins Achsrohrinnere gelangen können. Die Bohrung bzw. Entlüftungsöffnung 4 kann statt im Achsrohr 1 auch in dem Achsschenkel 2 angebracht werden.

Jeder Achsschenkel 2 weist, an seinem dem Achsrohr 1 zugewandten Ende, ebenfalls einen Rohrquerschnitt auf. Dieser Rohrquerschnitt ist im Wesentlichen gleich dem Rohrquerschnitt des Achsrohrs 1, und ist auf derselben Längsachse L angeordnet. Der offene Rohrquerschnitt des Achsschenkels 2 wird, da der Achsschenkel 2 ein Guss- oder Schmiedeteil ist, durch ein spanendes Bearbeitungsverfahren wie z. B. durch Überdrehen vorbereitet. Die ringförmige Stirnfläche des Achsschenkels 2 ist also eine in einem spanenden Bearbeitungsverfahren vorbereitete Fläche.

Der Achsschenkel 2 wird, noch vor dem Schweißprozess, mit Bohrungen zur späteren Befestigung eines ABS-Halters versehen. Falls, wie dargestellt, die beiden Rohrquerschnitte rund sind, ist der Innendurchmesser Dsi des Rohrquerschnitts an dem Achsschenkel 2 in etwa gleich dem Innendurchmesser DR, des Achsrohrs 1. Ebenso ist der Außendurchmesser Dsₐ des Rohrquerschnitts an dem Achsschenkel 2 in etwa gleich dem Außendurchmesser DR₃ des Achsrohrs 1.

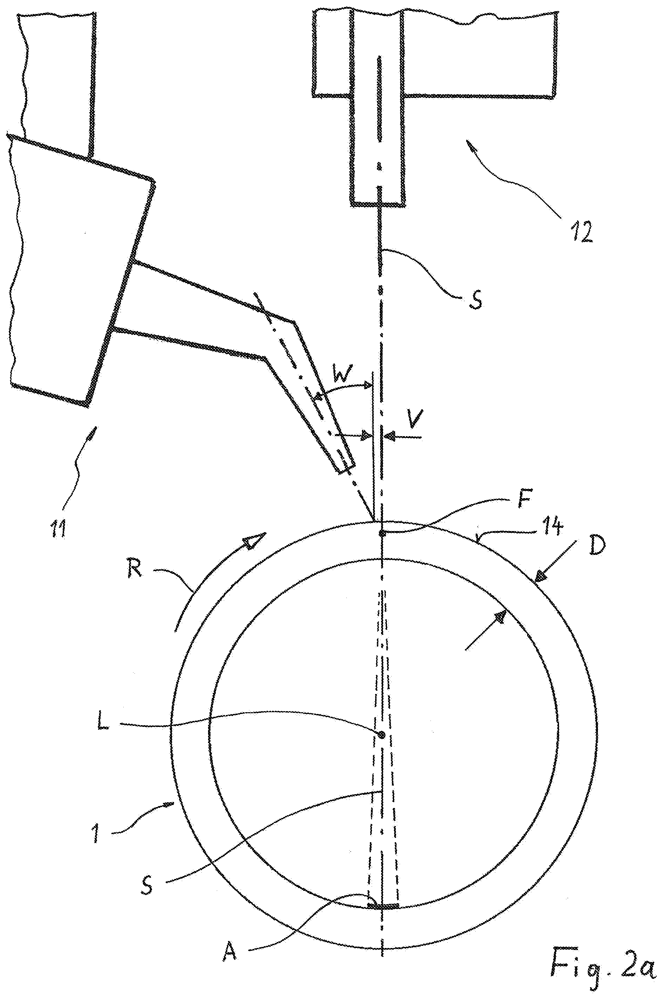

In dem Verbindungsbereich 5 erfolgt das stoffschlüssige Verbinden der beteiligten Rohrquerschnitte und damit die dauerhafte Befestigung des Achsschenkels 2 an dem jeweiligen Ende des Achsrohrs 1. Das Verbinden erfolgt mit Hilfe eines dualen Schweißverfahrens. Zu dessen Durchführung verfügt die verwendete Schweißanordnung 10 über eine in Fig. 2 nicht illustrierte Werkstückaufnahme, in der das Achsrohrende und der Achsschenkel 2 in koaxialer Ausrichtung auf der Längsachse L fixierbar sind, ferner über eine Lichtbogen-Schweißeinrichtung 11 und schließlich über eine parallel, d. h. gleichzeitig betreibbare Laser-Schweißeinrichtung 12. Vorzugsweise sind die zwei Schweißeinrichtungen 11 und 12 auf einem gemeinsamen Werkzeugträger befestigt, gegenüber dem die Werkstückaufnahme um die Längsachse L des Achskörpers rotierbar ist.

Zunächst werden das Achsrohrende und der Achsschenkel 2 in ihrer koaxialen Ausrichtung an den beteiligten Stoßflächen geheftet. Das Heften erfolgt an mindestens drei über den Umfang verteilten Heftpunkten, und vorzugsweise an sechs Heftpunkten.

Gemäß Fig. 2 sind die Lichtbogen-Schweißeinrichtung 11 und die Laser-Schweißeinrichtung 12 in etwa auf dieselbe Schweißposition außen an den einander gegenüberliegenden Stoßflächen der zwei zu verbindenden Rohrquerschnitte gerichtet. Vorzugsweise jedoch sind die beiden Arbeitsachsen so ausgerichtet, dass der Bearbeitungsort der Lichtbogen- Schweißeinrichtung 11 dem Ort, an dem zeitgleich der Laserstrahl S auf die Rohraußenseite 14 trifft, voreilt, wobei die Voreilung V vorzugsweise nicht mehr als 5 mm beträgt, und besonders bevorzugt nicht mehr als 3 mm.

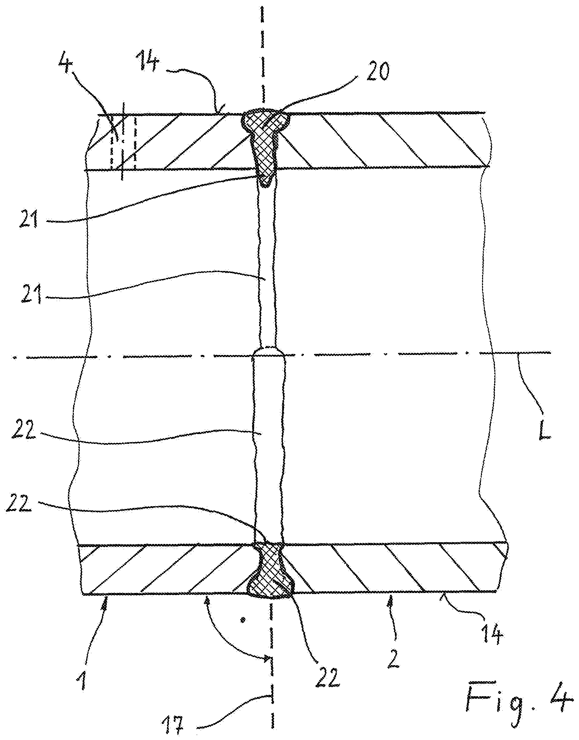

Der Energiestrahl S der Laser-Schweißeinrichtung trifft rechtwinklig auf die Außenseite 14 der Rohrquerschnitte. Die Strahlrichtung des Laserstrahls S ist derart, dass der Laserstrahl S senkrecht zur Längserstreckung des Achsrohrs 1 steht, und er dadurch gemäß Fig. 4 rechtwinklig auf die Längserstreckung der Rohraußenseite 14 trifft.

Zur Achse S des Energiestrahls des Lasers weist die Arbeitsachse der Lichtbogen-Schweißeinrichtung 11 einen Wnkel W auf, der 25° bis 30° zu der Achse S des Energiestrahls des Lasers beträgt, und vorzugsweise 27°. Jedoch befinden sich beide Achsen, also die Arbeitsachse der Lichtbogen-Schweißeinrichtung 11 und die Achse S des Energiestrahls des Lasers, in der durch die Stoßflächen der Rohrenden definierten Schweißebene 17 (Fig. 4). Vorzugsweise schneidet die Achse S des Laserstrahls die Längsachse L des Achsrohrs 1 rechtwinklig.

Die Lichtbogen-Schweißeinrichtung 11 ist z. B. zur Durchführung eines MAG-Schweißverfahrens (Metall-Aktivgas-Schweißen) ausgebildet und arbeitet vorzugsweise mit einer elektronisch gesteuerten Impulsstromquelle. Die Schweißeinrichtung erzeugt einen Lichtbogen zwischen dem von außen her zugeführten, vorzugsweise nickelhaltigen Schweißdraht und der Außenseite 14 des Verbindungsbereichs 5 Der Lichtbogen verschweißt die Stoßflächen an den Rohrenden und den zugeführten Schweißdraht, wobei die Schweißnaht 20 entsteht. Dieser Prozess wirkt nur ca. 4mm tief. Während des Schweißprozesses führt ein Drahtvorschubgerät den Schweißdraht kontinuierlich durch den Schweißbrenner zur Schweißstelle. Außerdem versorgt der Schweißbrenner die Schweißnaht 20 mit dem an dem Schweißprozess beteiligten Metall-Aktivgas.

Der Schweißdraht sollte nickellegiert sein, mit einem Nickel-Anteil von 1 ,5 % bis 5 % und vorzugsweise 2 % bis 3 % Volumenprozent.

Jedoch kann die Lichtbogen-Schweißeinrichtung 11 auch für andere Schweißdraht verbrauchende Schweißverfahren eingerichtet sein.

Die Laser-Schweißeinrichtung 12 ist bevorzugt ein Faserlaser. Jedoch lässt sich das Verbindungsverfahren auch mit einem Diodenlaser mit gepulsten Dioden durchführen. Die Laser-Schweißeinrichtung arbeitet mit einem Energiestrahl hoher Energiedichte, der auf einen bestimmten Brennpunkt fokussiert ist. Dieser Fokuspunkt F befindet sich vorzugsweise an einem Ort, der zwischen der Rohraußenseite 14 und einem Drittel der Wanddicke D des Achsrohrs 1 liegt. Daher befindet sich der Fokuspunkt F vorzugsweise an einem Ort, der einen kürzeren Abstand zu der Rohraußenseite 14 als zu der Rohrinnenseite aufweist.

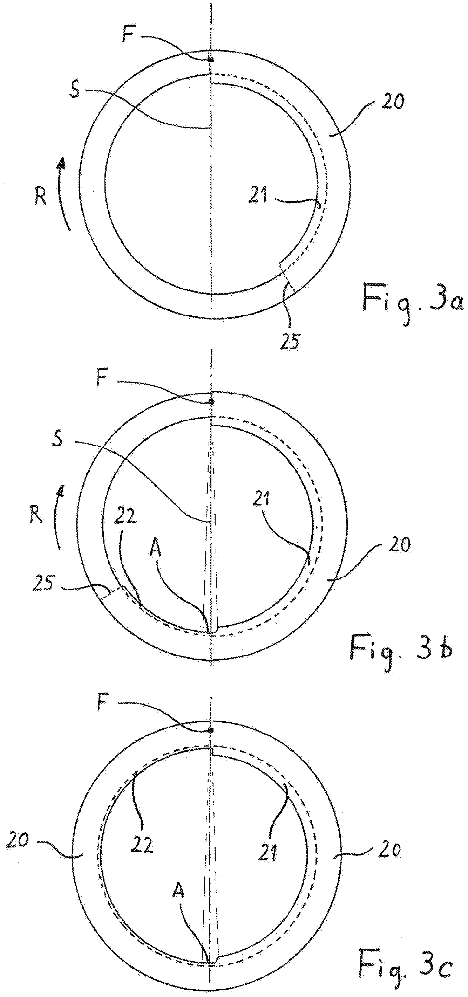

Die Breite des Laserstrahls verjüngt sich zunächst, ausgehend von dem Austritt aus der Laser-Schweißeinrichtung 12, bis zu dem Fokuspunkt F. Ab dem Fokuspunkt F verbreitert sich der Laserstrahl wieder, so dass auf der gegenüberliegenden Rohrinnenseite Energie des Laserstrahls auf eine Fläche A auftrifft. Die so an der gegenüberliegenden Rohrinnenseite in der Zone A zur Verfügung stehende Schmelzenergie hat im Rahmen des hier beschriebenen Verfahrens große Bedeutung. Die Fig. 3a zeigt die Situation im ersten Teil der Verfahrensdurchführung. Durch parallelen, also gleichzeitigen Betrieb beider Schweißeinrichtungen 11 , 12 ist die Schweißnaht bei Fig. 3a bereits über einen Teilumfang gezogen, welcher etwa ein Drittel des Gesamtumfangs beträgt. Mit Bezugszeichen 25 ist die Startposition des Schweißens bezeichnet, also der Anfang der bereits gezogenen Schweißnaht 20. Mit dem Pfeil R ist die Richtung der Drehung des aus Achsrohr 1 und Achsschenkel 2 bestehenden Werkstücks relativ zu den Schweißeinrichtungen bezeichnet. Für die Genauigkeit des Prozesses wird ein Nullspalt- Sensor eingesetzt. Dieser führt und positioniert die Schweißprozesse.

In radialer Richtung ist, wie der Längsschnitt Fig. 4 im oberen Teil zeigt, die Schweißnaht 20 durchgehend ausgebildet. Materialschmelze erstreckt sich also von der Rohraußenseite 14 bis zur Schweißnahtwurzel an der Rohrinnenseite. Die Energie des Lasers unterstützt die Ausbildung der Schweißnaht 20. Zugleich erreicht ein Teil der Laserenergie als Sekundärenergie die innen gegenüberliegende Zone A. Diese wird daher bereits vorgewärmt, was einen positiven Effekt auf die Gefügeausbildung und speziell den Härteverlauf hat.

Das Ziehen der Schweißnaht 20 hat allerdings zur Folge, dass sich an der Rohrinnenseite Material aufwirft. Es bildet sich hier eine Schweißnahtwurzel in Gestalt eines Grats 21 aus Schmelzmaterial, der wie eine ungleichmäßig geformte Rippe deutlich in das Rohrinnere 15 vorsteht.

Für die Ausbildung der Schweißnaht 20 verantwortlich ist das duale Schweißverfahren, bei dem die Bildung der Schweißnaht durch das Lichtbogenverfahren erfolgt, dies aber unterstützt wird durch die über den Laserstrahl eingetragene Energie (Primärenergie des Laserstrahls). Diese Energie führt zu einer Vergleichmäßigung und verbessert die Struktur der Schweißnaht insgesamt. Insbesondere erhält diese an der Rohraußenseite eine saubere, flache Nahtoberfläche. Die Fig. 3b zeigt ein weiter fortgeschrittenes Verfahrensstadium, bei dem sich die Schweißnaht 20 bereits über ein Umfangssegment erstreckt, welches ungefähr zwei Drittel des Gesamtumfangs beträgt.

Sobald die Schweißnaht über einen Umfangswinkel von 180° gezogen ist, gerät, wie in Fig. 3b unten dargestellt, der aus Schmelzmaterial der Wurzel bestehende Grat 21 in den Bereich jener Fläche A, die von der Energie des Laserstrahls S jenseits seines Fokuspunkts F erfasst wird, d.h. von der Sekundärenergie des Laserstrahls. Die Energiedichte in der Zone A reicht noch aus, den Grat 21 aufzuschmelzen, abzubauen und die Zone rund um den Grat zu vergleichmäßigen, so dass eine geglättete Wurzel 22 entsteht. Der Vorteil der so geglätteten Schweißnahtwurzel 22 ist eine Verbesserung der Materialstruktur und damit der Güte dieses Abschnitts der Schweißnaht.

Schließlich zeigt Fig. 3c die Situation bei Abschluss des Schweißverfahrens. Die Schweißnaht 20 ist über 360° bis 370° gezogen und vorzugsweise über einen Umfangswinkel von 365°. Dieser Vorgang dauert in etwa 15 Sekunden. Es sind zwei in etwa gleich große Umfangssegmente bzw. Teilumfänge entstanden. Das erst später geschweißte Umfangssegment, welches in Fig. 3c rechts wiedergegeben ist, weist den nach innen vorstehenden Grat 21 an der Schweißwurzel auf. Das als erstes geschweißte, in Fig. 3c links wiedergegebene Umfangssegment hingegen hat später die Glättung des Grates aufgrund der Energiedichte des Laserstrahls erfahren. Dabei erstreckt sich die erst später geschweißte Umfangslänge über einen Teilumfang von 170° bis 180°, und die als erstes geschweißte Umfangslänge über einen Teilumfang von 180° bis 190°.

Die bei dem Schutzgasschweißen entstehenden Gase, die sonst zu einem Überdruck führen könnten, können über die bereits beschriebene Entlüftungsöffnung 4 aus dem Rohrinneren entweichen. Diese wird dann später mit einem Verschlusselement verschlossen.

Im späteren praktischen Einsatz wird der Achskörper so in der Fahrzeugachse und insbesondere Nutzfahrzeugachse verbaut, dass sich der Teilumfang mit der geglätteten Schweißnahtwurzel 22 unten befindet, und er somit im Fahrbetrieb den besonders kritischen Zugbelastungen ausgesetzt ist. In Fig. 4 ist diese bei der späteren Achsmontage sicherzustellende Drehlage des Achskörpers im Längsschnitt wiedergegeben.

Für eine korrekte Achsmontage kann der fertiggestellte Achskörper außen mit mindestens einem Kennzeichen versehen sein, welches eindeutig den beiden Umfangsabschnitten bzw. Umfangssegmenten zuordenbar ist, also entweder dem ersten Umfangsabschnitt bzw. Umfangssegment, und / oder dem zweiten Umfangsabschnitt bzw. Umfangssegment. Das Kennzeichen sollte, in Wort oder Symbol, für "oben" bzw. für "unten" stehen. Das Kennzeichen kann zu diesem Zweck außen an dem Achskörper befestigt sein, oder in dessen Material unveränderlich eingraviert sein. Alternativ kann als Kennzeichen der mit Abschluss des Schweißverfahrens zurückbleibende Endkrater dienen. Insgesamt wird ein Achskörper geschaffen, der sich relativ schnell und mit wenigen Fertigungsschritten herstellen lässt. Das duale Schweißen erfolgt nur über einen Gesamtwinkel von 360° oder etwas mehr als 360°, führt an der Außenseite der Rohrenden zu einer sauberen, flachen Nahtoberfläche, und erfolgt nur "in einem Zug". Gleichwohl entstehen zwei unterschiedliche Umfangsabschnitte, die sich in der Schweißwurzelausbildung an der Innenseite der verbundenen Rohrenden unterscheiden.

Mit dem Verfahren können gleichzeitig an beiden Achsrohrenden die beiden Achschenkel 2 angeschweißt werden, soweit auch die Schweißanordnung 10 zweimal vorhanden ist. Dadurch wird Bearbeitungszeit gespart. Oder aber es wird, unter Einsatz von nur einer Schweißanordnung 10, zunächst nur der eine, und anschließend der andere Achsschenkel 2 mit dem Achsrohr 1 verbunden.

Das beschriebene Schweißverfahren ist daher bezüglich der typischen fahrdynamischen Belastung, denen ein Achskörper im Fahrbetrieb ausgesetzt ist, optimiert. Es wird dem Umstand Rechnung getragen, dass im Fahrbetrieb der in einem Achskörper herrschende Belastungszustand unterschiedlich in der oberen Hälfte des Achskörpers ist, wo vor allem Druckbelastungen herrschen, im Vergleich zur unteren Hälfte, wo vor allem Zugbelastungen wirken.

**Bezugszeichenliste**

| | | | |
|---|---|---|---|
| | | 10 | Schweißanordnung |
| 1 | Achsrohr | 11 | Lichtbogen-Schweißeinrichtung |
| 2 | Achsschenkel | 12 | Laser-Schweißeinrichtung |
| 3 | Lagerfläche | 14 | Rohraußenseite |
| 4 | Bohrung, Entlüftungsöffnung | 17 | Schweißebene |
| 5 | Verbindungsbereich | 20 | Schweißnaht |
| 21 | Grat aus Materialschmelze | D_{Si} | Innendurchmesser |
| 22 | geglättete Schweißnahtwurzel | F | Fokuspunkt |
| 25 | anfängliche Schweißposition | L | Längsachse des Achskörpers |
| A | Fläche, Zone | R | Drehrichtung |
| D | Wanddicke | S | Laserstrahl |
| D_{Ra} | Außendurchmesser | V | Voreilung |
| DR_{I} | Innendurchmesser | W | Winkel zwischen den Schweißeinrichtungen |
| Dsa | Außendurchmesser | | |

## Patentansprüche

1. Verfahren zum Herstellen eines Achskörpers einer Fahrzeugachse durch stoffschlüssiges Verbinden eines Achsrohrs (1) mit einem auf der Längsachse (L) des Achsrohrs angeordneten Achsschenkel (2), welcher mit Lagerflächen (3) für die Lagerung eines Fahrzeugrades versehen ist und dem Achsrohr (1) zugewandt einen Rohrquerschnitt aufweist, der im Wesentlichen gleich ist dem Rohrquerschnitt des Achsrohrs, mit den Schritten:
- Anordnen des Achsrohrs (1) und des Achsschenkels (2) mit koaxial gegeneinander gesetzten Stoßflächen ihrer Rohrquerschnitte in einer Werkstückaufnahme einer Schweißanordnung (10), wobei die Schweißanordnung (10) außerdem eine Lichtbogen-Schweißeinrichtung (11) und eine parallel betriebene Laser-Schweißeinrichtung (12) umfasst,
- kontinuierliches Ziehen einer Schweißnaht (20) in Umfangsrichtung der Rohrquerschnitte,
wobei beide Schweißeinrichtungen (11, 12) aktiv und von außen her auf im Wesentlichen denselben Umfangsabschnitt der Stoßflächen gerichtet sind, und
wobei der Laserstrahl (S) rechtwinklig auf die Rohraußenseite (14) trifft und vorzugsweise die Längsachse (L) des Achsrohrs (1) schneidet,
wobei während des Ziehens der Schweißnaht (20) sich Material an der Rohrinnenseite aufwirft und sich eine Schweißnahtwurzel in Gestalt eines Grats (21) aus Schmelzmaterial bildet,
wobei die Energie des Laserstrahls die Ausbildung der Schweißnaht (20) unterstützt und zugleich ein Teil der Laserenergie als Sekundärenergie eine gegenüberliegende Zone A der Rohrinnenseite erreicht,
wobei sobald die Schweißnaht über einen Umfangswinkel von 180° gezogen ist, die Energiedichte in der Zone A noch ausreicht, den bestehenden Grat 21 aufzuschmelzen, abzubauen und die Zone rund um den Grat zu vergleichmäßigen,
sodass die Schweißnahtwurzel auf der Rohrinnenseite entlang eines ersten, über etwa die Hälfte des Umfangs führenden, Schweißnahtabschnitts einen zum Rohrinneren vorstehenden Grat aus Materialschmelze, und entlang des zweiten Schweißnahtabschnitts eine im Vergleich geglättete Naht aufweist,
- Beendigung des Ziehens der Schweißnaht (20), nachdem diese über einen Umfangswinkel von mindestens 360° geführt ist

2. Verfahren nach Anspruch 1 , **dadurch gekennzeichnet, dass** sich der Fokuspunkt (F) des Laserstrahls (S) an einem Ort zwischen der Rohraußenseite (14) und einem Drittel der Wanddicke (D) des Achsrohrs (1) befindet.

3. Verfahren nach Anspruch 1 oder 2, **dadurch gekennzeichnet, dass** der Bearbeitungsort der Lichtbogen-Schweißeinrichtung (11) dem Ort, an dem der Laserstrahl (S) auf die Rohraußenseite (14) grifft, voreilt, wobei die Voreilung (V) vorzugsweise nicht mehr als 5 mm beträgt.

4. Verfahren nach einem der vorangehenden Ansprüche, **dadurch gekennzeichnet, dass** das Lichtbogenschweißen mit einem Schweißdraht durchgeführt wird, der mit Nickel legiert ist.

5. Verfahren nach einem der Ansprüche 1 - 4, **dadurch gekennzeichnet, dass** während des Ziehens der Schweißnaht (20) die Werkstückaufnahme um die Längsachse (L) des Achskörpers gedreht wird.

6. Verfahren nach einem der Ansprüche 1 - 4, **dadurch gekennzeichnet, dass** während des Ziehens der Schweißnaht (20) die beiden Schweißeinrichtungen (11 , 12) synchron auf einer Kreisbahn um die Längsachse (L) des Achskörpers bewegt werden.

7. Verfahren nach einem der vorangehenden Ansprüche, **dadurch gekennzeichnet, dass** zur Führung bzw. zur Positionierung der Schweißprozesse ein Nullspalt-Sensor eingesetzt wird.

8. Verfahren nach einem der vorangehenden Ansprüche, **dadurch gekennzeichnet, dass** die Stoßfläche des Achsrohrs (1) durch Sägen des Achsrohrs erzeugt wird.

9. Verfahren nach einem der vorangehenden Ansprüche, **dadurch gekennzeichnet, dass** das Achsrohr (1) zur Schweißvorbereitung mit einer Entlüftungsöffnung (4) versehen wird, über welche Gase aus dem Rohrinneren entweichen können.

10. Verfahren nach einem der vorangehenden Ansprüche, **dadurch gekennzeichnet, dass** zur Schweißvorbereitung das Achsrohr (1) und der Achsschenkel (2) im Bereich ihrer Stoßflächen durch Setzen von Heftpunkten vorläufig verbunden und zueinander ausgerichtet werden.

11. Achskörper einer Fahrzeugachse, bestehend aus einem Achsrohr (1) und einem mit Lagerflächen (3) für die Lagerung des jeweiligen Fahrzeugrades versehenen Achsschenkel (2),
welcher dem Achsrohr (1) zugewandt einen Rohrquerschnitt aufweist, der im Wesentlichen gleich ist dem Rohrquerschnitt des Achsrohrs (1),
wobei die beiden Rohrquerschnitte gegeneinander gesetzt und über eine Schweißnaht (20) stoffschlüssig miteinander verbunden sind,
wobei die Schweißnaht (20) von der Außenseite der Rohrquerschnitte bis zu einer auf der Innenseite der Rohrquerschnitte angeordneten Schweißnahtwurzel reicht und sich über den gesamten Umfang des Achskörpers erstreckt mit einem ersten, über etwa die Hälfte des Umfangs führenden Schweißnahtabschnitt und einem zweiten, über den Rest des Umfangs führenden Schweißnahtabschnitt, und
wobei die Schweißnahtwurzel auf der Rohrinnenseite entlang des ersten Schweißnahtabschnitts einen zum Rohrinneren vorstehenden Grat (21) aus Materialschmelze, und entlang des zweiten Schweißnahtabschnitts eine im Vergleich geglättete Naht (22) aufweist.

12. Achskörper nach Anspruch 11 , **dadurch gekennzeichnet, dass** der erste Schweißnahtabschnitt über eine Umfangslänge von 170° bis 180°, und der zweite Schweißnahtabschnitt über eine Umfangslänge von 180° bis 190° führt.

13. Achskörper nach einem der Ansprüche 11 - 12, **dadurch gekennzeichnet, dass** dieser mit einer Entlüftungsöffnung (4) für den Schweißprozess versehen ist.

14. Achskörper nach Anspruch 16, **dadurch gekennzeichnet, dass** die Entlüftungsöffnung (4) durch ein Verschlusselement verschlossen ist.

## Claims

1. Method for producing an axle casing of a vehicle axle by integrally connecting an axle tube (1) to a steering knuckle (2) arranged on the longitudinal axis (L) of the axle tube, which steering knuckle is provided with mounting surfaces (3) for mounting a vehicle wheel and has, facing the axle tube (1), a tube cross-section which is substantially equal to the tube cross-section of the axle tube, comprising the steps of:
- arranging the axle tube (1) and the steering knuckle (2) so as to have abutting surfaces of the tube cross-sections thereof, which surfaces are positioned coaxially opposite one another, in a workpiece holder of a welding arrangement (10), wherein the welding arrangement (10) also comprises an arc welding device (11) and a laser welding device (12) operated in parallel,
- continuously drawing a welded seam (20) in the circumferential direction of the tube cross-sections,
wherein the two welding devices (11, 12) are actively directed from the outside onto substantially the same circumferential portion of the abutting surfaces, and
wherein the laser beam (S) strikes the outside (14) of the tube at a right angle and preferably intersects the longitudinal axis (L) of the axle tube (1),
wherein, during the drawing of the welded seam (20), material is built up on the inside of the tube and a welded seam root in the form of a ridge (21) of molten material is formed,
wherein the energy of the laser beam assists the formation of the welded seam (20) and at the same time part of the laser energy reaches an opposite zone A of the inside of the tube as secondary energy,
wherein, as soon as the welded seam has been drawn over a circumferential angle of 180°, the energy density in zone A is still sufficient to melt and break down the existing ridge 21 and to homogenize the zone around the ridge,
so that the welded seam root, on the inside of the tube, has a ridge of molten material projecting toward the tube interior along a first welded seam portion extending over approximately half the circumference, and a comparatively smoothed seam along the second welded seam portion,
- completing the drawing of the welded seam (20) after it has been guided over a circumferential angle of at least 360°.

2. Method according to claim 1, **characterized in that** the focal point (F) of the laser beam (S) is situated at a location between the outside (14) of the tube and one third of the wall thickness (D) of the axle tube (1).

3. Method according to claim 1 or 2, **characterized in that** the treatment location of the arc welding device (11) is in advance of the location at which the laser beam (S) areikwa the outside (14) of the tube, wherein the advance (V) is preferably not more than 5 mm.

4. Method according to any of the preceding claims, **characterized in that** the arc welding is carried out using a welding wire that is alloyed with nickel.

5. Method according to any of claims 1 - 4, **characterized in that** during the drawing of the welded seam (20), the workpiece holder is rotated about the longitudinal axis (L) of the axle casing.

6. Method according to any of claims 1 - 4, **characterized in that** during the drawing of the welded seam (20), the two welding devices (11, 12) are moved synchronously on a circular path around the longitudinal axis (L) of the axle casing.

7. Method according to any of the preceding claims, **characterized in that** a zero gap sensor is used to guide or position the welding processes.

8. Method according to any of the preceding claims, **characterized in that** the abutting surface of the axle tube (1) is created by sawing the axle tube.

9. Method according to any of the preceding claims, **characterized in that,** for welding preparation, the axle tube (1) is provided with a vent opening (4) through which opening gases can escape from the tube interior.

10. Method according to any of the preceding claims, **characterized in that,** for welding preparation, the axle tube (1) and the steering knuckle (2) are temporarily connected and aligned to one another in the region of the abutting surfaces thereof by placing tacking points.

11. Axle casing of a vehicle axle, consisting of an axle tube (1) and a steering knuckle (2) provided with mounting surfaces (3) for mounting the relevant vehicle wheel,
which steering knuckle has, facing the axle tube (1), a tube cross-section which is substantially equal to the tube cross-section of the axle tube (1),
wherein the two tube cross-sections are placed against one another and are integrally connected to one another by a welded seam (20),
wherein the welded seam (20) reaches from the outside of the tube cross-sections to a welded seam root arranged on the inside of the tube cross-sections and extends over the entire circumference of the axle casing with a first welded seam portion extending over approximately half of the circumference and a second welded seam portion extending over the remainder of the circumference, and
wherein the welded root, on the inside of the tube, has a ridge (21) of molten material projecting toward the tube interior along the first welded seam portion, and has a comparatively smoothed seam (22) along the second welded seam portion.

12. Axle casing according to claim 11, **characterized in that** the first welded seam portion extends over a circumferential length of 170° to 180°, and the second welded seam portion extends over a circumferential length of 180° to 190°.

13. Axle casing according to any of claims 11 - 12, **characterized in that** it is provided with a vent opening (4) for the welding process.

14. Axle casing according to claim 16, **characterized in that** the vent opening (4) is closed by a closure element.

## Revendications

1. Procédé de fabrication d'un corps d'essieu d'un essieu de véhicule par liaison par matière d'un tube d'essieu (1) avec une fusée d'essieu (2) disposée sur l'axe longitudinal (L) du tube d'essieu, laquelle est pourvue de surfaces d'appui (3) pour le montage d'une roue de véhicule et présente, en regard du tube d'essieu (1), une section transversale de tube qui est sensiblement égale à la section transversale de tube du tube d'essieu, avec les étapes :
- de disposition du tube d'essieu (1) et de la fusée d'essieu (2) avec des surfaces de butée de leurs sections transversales de tube placées coaxialement l'une contre l'autre dans un porte-pièce d'un ensemble de soudage (10), dans lequel l'ensemble de soudage (10) comprend en outre un dispositif de soudage à l'arc (11) et un dispositif de soudage au laser (12) fonctionnant en parallèle,
- d'étirage en continu d'un cordon de soudure (20) dans la direction circonférentielle des sections transversales de tube,
dans lequel les deux dispositifs de soudage (11, 12) sont dirigés activement et de l'extérieur vers sensiblement la même section circonférentielle des surfaces de butée, et
dans lequel le faisceau laser (S) frappe à angle droit la face extérieure de tube (14) et coupe de préférence l'axe longitudinal (L) du tube d'essieu (1),
dans lequel, pendant l'étirage du cordon de soudure (20), du matériau se soulève sur la face intérieure de tube et une racine de cordon de soudure se forme sous la forme d'une bavure (21) de matériau fondu,
dans lequel l'énergie du faisceau laser favorise la réalisation du cordon de soudure (20) et une partie de l'énergie laser atteint en même temps une zone A opposée de la face intérieure de tube en tant qu'énergie secondaire,
dans lequel la densité d'énergie dans la zone A est encore suffisante pour faire fondre la bavure (21) existante, la démolir et uniformiser la zone autour de la bavure, dès que le cordon de soudure est étiré sur un angle circonférentiel de 180°,
de sorte que la racine de cordon de soudure présente, sur la face intérieure de tube, le long d'une première section de cordon de soudure passant sur environ la moitié de la circonférence, une bavure de matériau en fusion faisant saillie vers l'intérieur du tube, et le long de la deuxième section de cordon de soudure, un cordon comparativement lissé,
- d'achèvement de l'étirage du cordon de soudure (20) après que celui-ci a été guidé sur un angle circonférentiel d'au moins 360°.

2. Procédé selon la revendication 1, **caractérisé en ce que** le point focal (F) du faisceau laser (S) se trouve à un endroit entre la face extérieure de tube (14) et un tiers de l'épaisseur de paroi (D) du tube d'essieu (1).

3. Procédé selon la revendication 1 ou 2, **caractérisé en ce que** l'emplacement d'usinage du dispositif de soudage à l'arc (11) est en avance sur l'emplacement où le faisceau laser (S) frappe la face extérieure de tube (14), dans lequel l'avance (V) n'est de préférence pas supérieure à 5 mm.

4. Procédé selon l'une quelconque des revendications précédentes, **caractérisé en ce que** le soudage à l'arc est mis en œuvre avec un fil de soudage qui est allié au nickel.

5. Procédé selon l'une quelconque des revendications 1 à 4, **caractérisé en ce que**, pendant l'étirage du cordon de soudure (20), le porte-pièce est amené à tourner autour de l'axe longitudinal (L) du corps d'essieu.

6. Procédé selon l'une quelconque des revendications 1 à 4, **caractérisé en ce que**, pendant l'étirage du cordon de soudure (20), les deux dispositifs de soudage (11, 12) sont déplacés de manière synchrone sur une trajectoire circulaire autour de l'axe longitudinal (L) du corps d'essieu.

7. Procédé selon l'une quelconque des revendications précédentes, **caractérisé en ce qu'**un capteur de fente nulle est utilisé pour le guidage ou le positionnement des processus de soudage.

8. Procédé selon l'une quelconque des revendications précédentes, **caractérisé en ce que** la surface de butée du tube d'essieu (1) est obtenue par sciage du tube d'essieu.

9. Procédé selon l'une quelconque des revendications précédentes, **caractérisé en ce que** le tube d'essieu (1) est pourvu, pour la préparation au soudage, d'une ouverture d'aération (4) par laquelle des gaz peuvent s'échapper de l'intérieur du tube.

10. Procédé selon l'une quelconque des revendications précédentes, **caractérisé en ce que**, pour la préparation au soudage, le tube d'essieu (1) et la fusée d'essieu (2) sont provisoirement reliés et alignés l'un par rapport à l'autre dans la zone de leurs surfaces de butée par la mise en place de points d'agrafage.

11. Corps d'essieu d'un essieu de véhicule, constitué d'un tube d'essieu (1) et d'une fusée d'essieu (2) pourvue de surfaces d'appui (3) pour le montage de la roue de véhicule respective,
lequel présente en regard du tube d'essieu (1) une section transversale de tube qui est sensiblement égale à la section transversale de tube du tube d'essieu (1),
dans lequel les deux sections transversales de tube sont placées l'une contre l'autre et reliées l'une à l'autre par un cordon de soudure (20) par liaison de matière,
dans lequel le cordon de soudure (20) parvient depuis la face extérieure des sections transversales de tube jusqu'à une racine de cordon de soudure disposée sur la face intérieure des sections transversales de tube et s'étend sur toute la circonférence du corps d'essieu avec une première section de cordon de soudure passant sur environ la moitié de la circonférence et une deuxième section de cordon de soudure menant au-dessus du reste de la circonférence ; et
dans lequel la racine de cordon de soudure présente sur la face intérieure de tube, le long de la première section de cordon de soudure, une bavure (21) de matière en fusion faisant saillie vers l'intérieur du tube, et le long de la deuxième section de cordon de soudure, un cordon (22) lissé par comparaison.

12. Corps d'essieu selon la revendication 11, **caractérisé en ce que** la première section de soudure passe sur une longueur circonférentielle de 170° à 180°, et la deuxième section de soudure sur une longueur circonférentielle de 180° à 190°.

13. Corps d'essieu selon l'une quelconque des revendications 11 à 12, **caractérisé en ce qu'**il est pourvu d'une ouverture d'aération (4) pour le processus de soudage.

14. Corps d'essieu selon la revendication 16, **caractérisé en ce que** l'ouverture d'aération (4) est fermée par un élément de fermeture.
